# EUROPÄISCHE PATENTSCHRIFT

(11) **EP 3 344 967 B1**
(45) Veröffentlichungstag und Bekanntmachung des Hinweises auf die Patenterteilung: **01.01.2020**
(21) Anmeldenummer: 16706176.1
(22) Anmeldetag: 24.02.2016
(51) Int. Cl.: G01L 9/00, G01L 19/06

(54) **DRUCKSENSORANORDNUNG SOWIE MESSUMFORMER ZUR PROZESSINSTRUMENTIERUNG MIT EINER DERARTIGEN DRUCKSENSORANORDNUNG**
PRESSURE SENSOR ASSEMBLY AND MEASUREMENT CONVERTER FOR PROCESS INSTRUMENTATION, COMPRISING SUCH A PRESSURE SENSOR ASSEMBLY
ENSEMBLE CAPTEUR DE PRESSION ET TRANSDUCTEURS DE MESURE POUR L'INSTRUMENTATION DE PROCESSUS À L'AIDE D'UN TEL ENSEMBLE CAPTEUR DE PRESSION

(30) Priorität: 31.08.2015 DE 102015216624
(43) Veröffentlichungstag der Anmeldung: 11.07.2018
(73) Patentinhaber: Siemens Aktiengesellschaft, 80333 München (DE)
(72) Erfinder: KLEHR, Stefan, 76764 Rheinzabern (DE)
(86) Internationale Anmeldenummer: PCT/EP2016/053820
(87) Internationale Veröffentlichungsnummer: WO 2017/036608

(56) Entgegenhaltungen:
- WO-A1-2005/121737
- US-A- 5 796 007
- US-A1- 2002 020 221
- US-A1- 2003 172 744
- "Load cell and weigh handbook", , 17. April 2014 (2014-04-17), XP055271990, Gefunden im Internet: URL:http://web.archive.org/web/20140417163 034/http://www.ricelake.com/docs/prodinfo/ Manuals/load-cells/lch_22054.pdf [gefunden am 2016-05-11]

## Beschreibung

Die Erfindung betrifft eine Drucksensoranordnung mit einem Rohr, in dessen Querschnitt eine mit dem zu messenden Druck beaufschlagte Membran angeordnet ist, gemäß dem Oberbegriff des Anspruchs 1 sowie einen Messumformer zur Prozessinstrumentierung mit einer derartigen Drucksensoranordnung gemäß Anspruch 5.

Eine solche Drucksensoranordnung ist aus der US 5 796 007 A bekannt.

In prozesstechnischen Anlagen werden zur Steuerung von Prozessen vielfältige Feldgeräte für die Prozessinstrumentierung eingesetzt. Messumformer dienen zur Erfassung von Prozessvariablen, wie beispielsweise Temperatur, Druck, Durchflussmenge, Füllstand, Dichte oder Gaskonzentration eines Mediums. Durch Stellglieder kann der Prozessablauf in Abhängigkeit von erfassten Prozessvariablen entsprechend einer beispielsweise von einer speicherprogrammierbaren Steuerung oder einer Leitstation vorgegebenen Strategie beeinflusst werden. Als Beispiele für Stellglieder seien ein Regelventil, eine Heizung oder eine Pumpe genannt. Insbesondere in verfahrenstechnischen Anlagen stellen Druckmessumformer wesentliche sensorische Komponenten im Rahmen von automatisierten Produktionsabläufen dar. Im Hinblick auf ein optimales Anlagenverhalten und eine dauerhaft hohe Produktqualität sind qualitativ hochwertige Messumformer notwendig, die auch unter extremen Bedingungen langzeitstabile und wenig fehlerbehaftete Messwerte liefern.

Aus der DE 196 08 321 C2 ist eine Drucksensoranordnung mit einem Überlastschutzsystem bekannt, die als Aufnehmer oder Messzelle in einem Messumformer für Differenzdruck eingesetzt werden kann. Die bekannte Messzelle ist ölbefüllt, sodass der eigentliche Drucksensor von einem eventuell aggressiven Prozessmedium getrennt ist. Das Überlastschutzsystem besteht aus mehreren zueinander korrespondierenden Membranen sowie einer exakt daran angepassten Ölbefüllung. Die Konstruktion einer derartigen Messzelle ist daher vergleichsweise aufwendig und es werden zur Herstellung der Messzelle eine Vielzahl von Schweißprozessen benötigt. Zudem unterliegen die Toleranzketten der Teilegeometrie, der Materialeigenschaften und der Schweißparameter hohen Genauigkeitsanforderungen. Die elektrischen Kontaktierungen des eigentlichen Drucksensors müssen beispielsweise über hochdruckfeste Glasdurchführungen aus dem druckbeaufschlagten Innenraum der Messzelle nach außen zu einer Elektronikeinheit geführt werden, in welcher die Signalverarbeitung zur Bestimmung des Druckmesswerts durchgeführt wird. Die Messzelle ist zudem nur bedingt vakuumfest und auch nur für einen vergleichsweise eingeschränkten Temperaturbereich einsetzbar. Bei Hygieneanwendungen, in denen die Gefahr einer Ölkontamination des Prozessmediums unbedingt vermieden werden muss, kann die Messzelle nicht verwendet werden.

Eine weitere Drucksensoranordnung ist aus der EP 2 294 376 B1 bekannt. Dort wird zur Druckerfassung eine Membran mit mehreren zueinander abgewinkelten Membranabschnitten verwendet. Ein Membranabschnitt ist als Trennmembran im Querschnitt eines Druckrohrs angeordnet und ein dazu abgewinkelter Membranabschnitt als Seitenwandmembran im Bereich der Druckrohrwandung. Eine an der Trennmembran anliegende Druckdifferenz führt zu deren Deformation, die sich aufgrund eines festen Winkels zwischen den beiden Membranabschnitten auf die Seitenwandmembran überträgt, sodass die dadurch bedingte Deformation der Seitenwandmembran ebenfalls die Druckverhältnisse innerhalb des Druckrohrs wiedergibt. Mittel zum Erfassen einer Membrandeformation werden auf der Außenseite der Seitenwandmembran angeordnet, damit diese nicht in Kontakt zum Medium, dessen Druck gemessen werden soll, stehen. Aufgrund der Anordnung des ersten Membranabschnitts als Trennmembran im Querschnitt des Rohrs kann die bekannte Drucksensoranordnung sowohl als Absolutdrucksensor eingesetzt werden als auch als Differenzdrucksensor, je nachdem, ob auf der einen Seite der Trennmembran ein definierter Referenzdruck anliegt oder die Trennmembran beidseitig mit einem Messdruck beaufschlagt wird. Die bekannte Drucksensoranordnung ist für einen Einsatz im Rahmen der Überwachung von Dieselpartikelfiltern vorgesehen, um den Abgasdruck vor und hinter dem Partikelfilter zu messen und so den Stand seiner Beladung zu ermitteln. Dabei tritt, im Unterschied zur Prozessinstrumentierung, ein allenfalls geringer statischer Druck auf. Bei der beschriebenen Drucksensoranordnung ist jedoch die Differenzdruckmessung vom statischen Druck, der insbesondere zu einer Deformation der Seitenwandmembran führt, in nachteiliger Weise stark abhängig und dessen Kompensation nur unzureichend möglich, da diese eine exakte Positionierung der auf der Rohraußenwand applizierten Dehnungsaufnehmer voraussetzt, die in der Praxis kaum mit der erforderlichen Genauigkeit erreichbar ist.

Aus der DE 93 00 776 U1 ist ein Drucksensor bekannt, der ein dosenförmiges Gehäuse aufweist, welches durch eine ringförmige Membran in zwei Messkammern unterteilt ist. Die Membran ist mittels zentral angeordneter Ringe gewellt und im mittleren Bereich als scheibenförmige Druckwand ausgebildet. Eine Druckdifferenz in den beiden Messkammern führt zu einer axialen Verschiebung, die durch einen induktiven Sensor erfasst wird. In nachteiliger Weise ist der induktive Sensor dabei innerhalb einer Messkammer angeordnet.

Aus der WO 2005/121737 A1 ist eine Druckmesszelle mit einem rohrförmigen Gehäuse bekannt, in dessen Querschnitt eine in axialer Richtung auslenkbare Membran angeordnet ist. Dazu ist die Membran im Randbereich unter Bildung einer Druckmesszelle mit einem Grundkörper verbunden, der in dem Gehäuse montiert ist. In dem Gehäuse ist ferner gegenüber der Messseite der Membran ein Druckkopplungselement angeordnet, das über einen zentralen Stößel mit der Membran verbunden ist, so dass die Membran im mittleren Bereich eine hohe Biegesteifigkeit aufweist. Das Druckkopplungselement überträgt den zu messenden Druck eines Mediums über den Stößel auf die Membran, deren druckabhängige Auslenkung von Dehnungsmessstreifen erfasst wird. Zwischen dem Druckkopplungselement und der Membran ist ein Hohlraum ausgebildet, in dem ein ringförmiges Anschlagselement angeordnet ist. Das Anschlagselement liegt mit einer Anschlagsfläche an dem Druckkopplungselement an und mit der anderen Anschlagsfläche in einem geringen Abstand (Spiel) zu der Messseite der Membran. Im Überlastfall stützt sich die Membran an dem Anschlagselement ab, wobei das Spiel der maximal möglichen Auslenkung der Membran bzw. des Druckkopplungselements entspricht. Zwischen dem Gehäuse und dem Druckkopplungselement ist eine Dichtung vorgesehen, um die Druckmesszelle gegenüber dem Medium zu schützen, und das Druckkopplungselement für den Fall festzuhalten, dass die von der Membran und dem Grundkörper gebildete Druckmesszelle und das Druckkopplungselement nicht einstückig miteinander ausgebildet sind.

Bei der aus der eingangs erwähnten US 5 796 007 A bekannten Drucksensoranordnung ist die Membran im mittleren Bereich biegesteif ausgeführt und im Randbereich durch Aufhängung mit zwei im Wesentlichen parallel zur Ebene der Membran verlaufenden, bezüglich der Rohrachse rotationssymmetrischen Schenkeln in axialer Richtung federnd im Rohr gelagert, so dass eine axiale Verschiebung der Membran in der Nähe der Rohrwand auftritt und es dadurch möglich ist, diese axiale Verschiebung quasi von außen messtechnisch zu erfassen.

Eine ähnliche aus der US 2003/172744 A1 bekannte Drucksensoranordnung weist Dehnungsaufnehmer zur Erfassung der Verschiebung der Membran auf. Zur Begrenzung der Membranverschiebung sind ringscheibenförmige Anschläge vorgesehen, die in eine Ausnehmung zwischen den zur Aufhängung der Membran dienenden Schenkeln hineinragen.

Bei einer ähnlichen der US 2002/020221 A1 bekannten Drucksensoranordnung besteht die Membran aus zwei Membranhälften, die auf entgegengesetzten Seiten einer Membranträgerstruktur montiert sind. Die beiden Membranhälften weisen im mittleren Bereich eine hohe Biegesteifigkeit auf sind dort miteinander verbunden, so dass sie im Randbereich an rotationssymmetrischen Schenkeln federnd an der Membranträgerstruktur gehalten sind. Die Membranträgerstruktur kann ein- oder zweiteilig ausgebildet sein und weist einen umlaufenden Anschlag auf, der in eine Ausnehmung zwischen den zur Aufhängung der Membran dienenden Schenkeln hineinragt und die Membranverschiebung begrenzt.

Insbesondere gegenüber der Drucksensoranordnung, welche aus der bereits eingangs genannten DE 196 08 321 C2 bekannt ist, haben diese aus der US 5 796 007 A, US 2003/172744 A1 und US 2002/020221 A1 bekannten Anordnungen den Vorteil, dass ihr konstruktiver Aufbau erheblich einfacher ist, da keine Ölfüllung, kein korrespondierendes Überlastschutzsystem, keine druckfeste Glasdurchführung und weniger Schweißverbindungen erforderlich sind.

Der Erfindung liegt die Aufgabe zugrunde, eine Drucksensoranordnung zu schaffen, die sich durch einen einfachen konstruktiven Aufbau auszeichnet und gleichzeitig für einen Einsatz in einem Messumformer zur Prozessinstrumentierung geeignet ist.

Zur Lösung dieser Aufgabe weist die neue Drucksensoranwendung der eingangs genannten Art die im kennzeichnenden Teil des Anspruchs 1 angegebenen Merkmale auf. In den abhängigen Ansprüchen sind vorteilhafte Weiterbildungen der Erfindung, in Anspruch 5 ein Messumformer zur Prozessinstrumentierung mit einer derartigen Drucksensoranordnung beschrieben.

Das zusammen mit der Membran als ein Teil ausgebildete Rohr oder die beiden zusammen mit jeweils einer Membranhälfte als zwei jeweils einteilige Bauelemente ausgebildeten Rohrhälften können überwiegend durch Drehen gefertigt werden. Der Überlastring kann bei einteiliger Ausbildung ebenfalls durch Drehen und bei mehrteiliger segmentierter Ausbildung als Formteile gefertigt werden. Die nötige Präzision beim Zusammenbau kann durch definierte Maßtoleranzen der Drehteile erreicht werden. Durch definierte Anschläge und Verwendung einer geeigneten Schweißvorrichtung ist ein einfacher Zusammenbau bei hoher Präzision möglich.

Die Schenkel zur Aufhängung der Membran können jeweils um einen Winkel von maximal 10° gegenüber der Ebene der Membran geneigt sein. Die Neigung wird dabei als der Winkel definiert, der zwischen einer gedachten Verbindungslinie, die als eine Gerade die Schenkelanschlusspunkte an der Membran und am Rohr miteinander verbindet, und der Membranebene eingeschlossen wird, wobei die Verbindungslinie die Rohrachse schneidet. Eine Neigung der beiden Schenkel der Membranaufhängung um einen kleinen Winkel gegenüber der Membranebene kann beispielsweise erreicht werden, indem zwei ursprünglich parallele Schenkel durch eine mechanische Vorspannung aus ihrer parallelen Lage, die auch als Nulllage bezeichnet werden kann, verschoben werden. Damit sind die beiden Schenkel immer außerhalb ihrer Nulllage, sowohl bei Nulldruck als auch über den gesamten Druckmessbereich. Eine derartige Winkellage der Schenkel hat den Vorteil, dass einem möglichen Knackfroscheffekt, d. h. einer sprungförmigen axialen Verschiebung der Membran bei Überschreiten der Nulllage, vorgebeugt werden kann. Der beschriebene Knackfroscheffekt könnte ohne diese Maßnahme eventuell zu einer Hysterese in einem durch die Mittel zur Erfassung der Verschiebung gewonnenen Messsignal führen.

Wenn das Rohr zusammen mit der Membran als ein Teil ausgebildet ist, kann die Stirnseite der Membran ist zur Ausbildung der beiden Schenkel mit zumindest einer in radialer Richtung in die Membran hineinragenden Nut versehen sein. Das hat den Vorteil, dass bei besonders einfacher Konstruktion und aufwandsarmer Herstellung eine Aufhängung mit zwei flachen, im Wesentlichen parallel zueinander liegenden bzw. - bei der oben beschriebenen Vorspannung der Schenkel - angewinkelten Ringscheiben als Federung erhalten wird, deren Anordnung in einem Längsschnitt entlang der Rohrachse ähnlich einem Parallelogramm bzw. ähnlich einem Trapez mit kleinem Öffnungswinkel der Schenkel ist.

Prinzipiell können verschiedenste Messmethoden zur Erfassung der axialen, vom zu messenden Druck abhängigen Verschiebung der Membran verwendet werden. Beispielsweise kann eine optische Messung mittels Laser, eine kapazitive Messung mit geeignet angebrachten Elektroden, eine magnetische oder eine Ultraschallmessung zum Einsatz kommen. Als besonders vorteilhaft hat sich jedoch die erfindungsgemäße Ausgestaltung erwiesen, bei welcher Dehnungsaufnehmer auf den beiden Innenseiten der Schenkel, d. h. den einander zugewandten Schenkelseiten, zur Erfassung der von der Verschiebung der Membran abhängigen Biegung der Schenkel appliziert werden. Das hat den Vorteil, dass die beiden Dehnungsaufnehmer, die in der vorliegenden Anmeldung auch als Sensoren bezeichnet werden, in entgegengesetzter Richtung ausgelenkt werden. Während der eine Sensor nämlich eine Dehnung erfährt, wird der auf der gegenüberliegenden Seite applizierte Sensor gestaucht. Die beiden Sensoren erzeugen somit ein gegenläufiges Messsignal, das zur Bestimmung der Verschiebung und damit des zu messenden Drucks durch eine sich anschließende Signalverarbeitung ausgewertet werden kann. Damit wird in vorteilhafter Weise eine Kompensation von Temperatureinflüssen oder des statischen Drucks ermöglicht.

Der Überlastschutz, durch welchen bei starker Druckbelastung eine plastische Verformung oder ein Bersten der Schenkel verhindert werden kann, ist mit besonders einfachen konstruktiven Mitteln erhältlich, da zur Begrenzung der Membranverschiebung über den Umfangsbereich der Membran verteilte mechanische Anschläge vorgesehen sind. Dabei sind die Maßnahmen zum Überlastschutz vom Prozessmedium getrennt und insbesondere bei aggressiven Medien geschützt, weil die mechanischen Anschläge zwischen den Schenkeln angeordnet und mit Zapfen oder Stegen realisiert sind, die mit dem Rohr mechanisch steif verbunden sind und in dazu korrespondierende Ausnehmungen an der Stirnseite der Membran hineinragen. Ebenso getrennt vom Prozessmedium und zudem mit einem besonders geringen Herstellungsaufwand verbunden ist ein Überlastschutz gemäß einer Ausführungsform, bei welcher die Membran an ihrer Stirnseite eine umlaufende Nut aufweist, in welche ein dazu korrespondierender Steg, der am Rohr befestigt ist, zur Realisierung eines mechanischen Anschlags hineinragt.

Aufgrund der Robustheit, Druck- und Vakuumfestigkeit sowie ihrer Unempfindlichkeit gegenüber statischem Druck und Temperatur ist die neue Drucksensoranordnung besonders für einen Einsatz als Messzelle oder Aufnehmer in einem Messumformer zur Prozessinstrumentierung geeignet.

Anhand der Zeichnungen, in denen Ausführungsbeispiele der Erfindung dargestellt sind, werden im Folgenden die Erfindung sowie Ausgestaltungen und Vorteile näher erläutert.

Es zeigen:
- Figur 1: eine perspektivische Ansicht einer Drucksensoranordnung,
- Figur 2: einen Randbereich einer Drucksensoranordnung im Längsschnitt,
- Figur 3: den Randbereich gemäß Figur 2 bei Belastung,
- Figur 4: den Randbereich gemäß Figur 2 bei Überlast,
- Figur 5: einen Randbereich einer Drucksensoranordnung mit vorgespannten Schenkeln,
- Figur 6: einen Längsschnitt eines Schenkels zur Verdeutlichung des Verhaltens bei statischem Druck,
- Figur 7: einen Längsschnitt eines Schenkels mit Überlastschutz bezüglich statischem Druck und
- Figur 8: eine Explosionszeichnung zur Verdeutlichung einer Montagemöglichkeit einer Drucksensoranordnung.

In den Figuren sind gleiche Teile mit gleichen Bezugszeichen versehen.

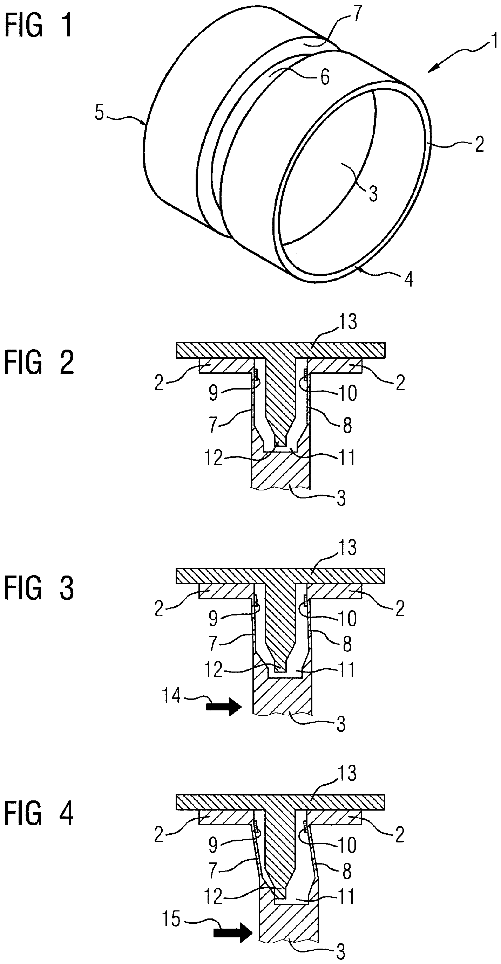

In der perspektivischen Ansicht gemäß Figur 1 ist die prinzipielle Form einer Drucksensoranordnung 1 mit einem Rohr 2, in dessen Querschnitt eine mit dem zu messenden Druck beaufschlagte Membran 3 angeordnet ist, gut erkennbar. Bei einer Verwendung der dargestellten Drucksensoranordnung 1 in einem Druckmessumformer zur Prozessinstrumentierung können die beiden Enden 4 und 5 des Rohrs 2 jeweils mit einer in Figur 1 nicht dargestellten Kappe verschlossen werden, über welche Prozessmedium mit dem zu messenden Druck einer Seite der Membran 3 bei einem Absolutdrucksensor oder beiden Seiten der Membran 3 bei einem Differenzdrucksensor zugeführt werden kann. Eine Elektronikeinheit zur Auswertung der durch die Drucksensoranordnung 1 erzeugten, vom jeweils zu messenden Druck abhängigen elektrischen Signale kann auf herkömmliche Art und Weise gestaltet sein und ist ebenfalls in Figur 1 nicht dargestellt. In Figur 1 wird deutlich, dass sich der konstruktive Aufbau einer Differenzdruckmesszelle bei Verwendung einer Membran 3, die im Randbereich 6 in axialer Richtung federnd im Rohr 2 gelagert ist, gegenüber einer herkömmlichen Messzelle mit Überlastschutzsystem und Füllöl als Druckmittler erheblich vereinfacht. Das Prozessmedium wird im Falle eines Differenzdruckmessumformers direkt auf beide Seiten der Membran 3 geführt, es wird keine Ölfüllung und keine aufwendige Konstruktion eines Überlastschutzsystems benötigt, Schweißprozesse sind in nur geringem Umfang erforderlich und eine druckfeste Glasdurchführung für elektrische Signale kann entfallen. Zudem können Rohr 2 und Membran 3 überwiegend durch Drehen gefertigt werden. Die Abmessungen der Messzelle können so gestaltet werden, dass sie im Hinblick auf ihre mechanischen Schnittstellen zu den übrigen Komponenten eines Messumformers kompatibel zu herkömmlichen Messzellen ist, sodass lediglich die Messzelle, d. h. die gezeigte Drucksensoranordnung 1, ausgetauscht werden muss und Flanschteile, Gehäuse etc. vom herkömmlichen Messumformer übernommen werden können. Bei der Membran 3 handelt es sich um eine vergleichsweise dicke Membranscheibe mit im mittleren Bereich hoher Biegesteifigkeit, die im Randbereich 6 mit einer Nut versehen ist. Durch die mittig angebrachte Nut entstehen zwei Schenkel gleicher Dicke, von denen in Figur 1 lediglich ein Schenkel 7 sichtbar ist. Die beiden Schenkel haben eine geringere Biegesteifigkeit und sorgen so für die erwähnte, in axialer Richtung federnde Lagerung der Membran 3.

In Figur 2 sind in dem gezeigten Ausschnitt eines Längsschnitts durch die Anordnung 1 die beiden Schenkel 7 und 8, die im Schnittbild ähnlich einem Parallelogramm sind, gut sichtbar. Zwei Dehnungsaufnehmer 9 und 10 sind auf den einander zugewandten Seiten der Schenkel 7 und 8 an Orten appliziert, die bei einer axialen Verschiebung der Membran 3 hohen mechanischen Spannungen ausgesetzt sind. Die beiden Schenkel 7 und 8 verlaufen bei diesem Ausführungsbeispiel im Wesentlichen parallel zur Mittenebene der Membran 3. Ein mechanischer Anschlag zur Begrenzung der Verschiebung bei Überlast ist durch eine in die Stirnseite der Membran 3 eingearbeitete, umlaufende Nut 11 realisiert, in welche ein dazu korrespondierender Steg 12, der eine geringere Breite hat, hineinragt. Der Steg 12 ist biegesteif ausgeführt und Bestandteil eines Überlastrings 13, der mit dem Rohr 2 fest verbunden ist.

Liegt beispielsweise auf der linken Seite der Membran 3 ein höherer Druck 14 als auf der rechten Seite an, erfährt die Membran 3 eine Verschiebung in Richtung parallel zur Rohrachse, wie sie in Figur 3 dargestellt ist. Dabei werden die beiden Dehnungsaufnehmer 9 und 10 mechanischen Spannungen ausgesetzt, die unterschiedliche Vorzeichen besitzen. Während der linke Dehnungsaufnehmer 9 eine Stauchung erfährt, wird der rechte Dehnungsaufnehmer 10 gestreckt. Liegt abweichend von der dargestellten Situation auf der rechten Seite der Membran 3 ein höherer Druck an, verhält es sich entsprechend umgekehrt und der linke Sensor 9 wird gestreckt, während der rechte Sensor 10 gestaucht wird. Die beiden Sensoren oder Dehnungsaufnehmer 9 und 10 erzeugen somit gegenläufige Messsignale, die in üblicher Weise ausgewertet werden können. Fehler aufgrund von Störgrößen, beispielsweise der Temperatur oder des statischen Drucks, können somit weitgehend kompensiert werden.

Bei Belastung der Membran 3 mit einem Druck 15, der die Grenze zur Überlast überschreitet, wird eine übermäßige Bewegung der Membran 3 durch einen mechanischen Anschlag verhindert, da der biegesteife Steg 12 an einer Seitenwand der Nut 11 anschlägt. Eine übermäßige Verschiebung der Membran 3 in entgegengesetzter Richtung wird auf analoge Weise verhindert. Sensoren 9 und 10 sowie mechanischer Anschlag zum Überlastschutz kommen vorteilhaft mit einem Prozessmedium nicht in Berührung.

Die Druckempfindlichkeit der beschriebenen Anordnung 1 ist unter anderem abhängig von der Fläche der Membran 3, die aufgrund ihrer rotationssymmetrischen Ausführung durch den Membrandurchmesser gekennzeichnet ist, der Wandstärke der Schenkel 7 und 8, mit welchen die Membran 3 im Rohr 2 in axialer Richtung verschiebbar aufgehängt ist, sowie der Länge der Schenkel 7 und 8 in bezüglich der Geometrie der Membran 3 radialer Richtung. Durch Dimensionierung dieser Parameter können weitgehend beliebig wählbare Druckmessbereiche realisiert werden. Die Messzelle ist trocken, d. h. ohne Ölfüllung, hat einen relativ einfachen Aufbau und kann bei segmentierter Ausführung des Überlastrings 13 (Figur 2) weitgehend aus einem Stück gedreht werden. Ferner ist die Messzelle in vorteilhafter Weise vakuumfest und kann in einem weiten Temperaturbereich betrieben werden, der vorwiegend durch die Eigenschaften der Sensoren 9 und 10 begrenzt wird.

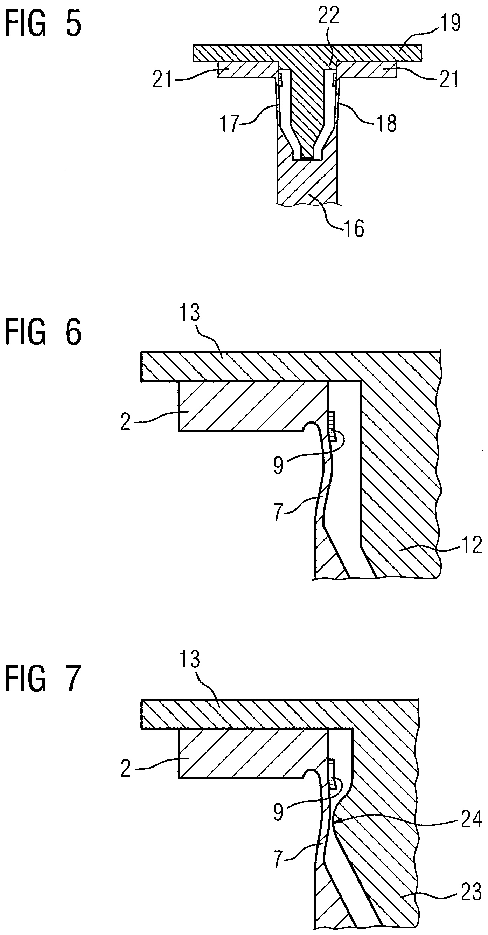

Gemäß der in Figur 5 gezeigten alternativen Ausgestaltung der Drucksensoranordnung besteht die Möglichkeit, die federnde Lagerung einer Membran 16 mit zwei Schenkeln 17 und 18 zu realisieren, die gegenüber der Ebene der Membran 16 um einen kleinen Winkel geneigt sind. Zur Aufrechterhaltung der dazu erforderlichen Vorspannung kann ein Überlastring 19, der beidseitig mit einem Rohr 21 verbunden ist, mit einem kleinen Vorsprung 22 versehen sein, durch welchen die Schenkel 17 und 18 gespreizt werden. Die beschriebene Vorspannung kann nachträglich beim Zusammenbau der Drucksensoranordnung realisiert werden, basierend auf Drehteilen, die ähnlich den bereits zuvor beschriebenen sind.

Zur Vermeidung des Knackfroscheffekts können Schenkel abweichend von dem in Figur 5 dargestellten Ausführungsbeispiel auch um einen Winkel mit entgegengesetztem Vorzeichen gegenüber der Membranebene geneigt sein, sodass der Abstand der beiden Schenkel mit steigender Entfernung von der Rohrachse kleiner wird.

Statischer Druck liegt gleichzeitig auf beiden Seiten der Membran 3 an und führt zu einer im Wesentlichen S-förmigen Verformung der Schenkel, wie sie am Beispiel des Schenkels 7 in Figur 6 verdeutlicht ist. Die beschriebene Drucksensoranordnung ist vorteilhaft in der Lage, auch den statischen Druck zu messen. Dies ist möglich, da sich unter statischem Druck beide Schenkel der Membranaufhängung zueinander spiegelsymmetrisch verbiegen. Beide Druckaufnehmer, nämlich der in Figur 6 dargestellte Druckaufnehmer 9 sowie der nicht dargestellte Druckaufnehmer des gegenüberliegenden Schenkels, erfahren dabei eine Stauchung und geben somit ein gleichgerichtetes Sensorsignal ab, welches auch als Common Mode Signal bezeichnet wird. Die Membran 3 selbst bleibt währenddessen an derselben Stelle, solange der Differenzdruck unverändert ist.

Anhand Figur 7 wird ein erweiterter Überlastschutz erläutert. Dieser begrenzt die Verformung des Schenkels 7, wenn bei sehr großem Druck der Schenkel 7 der Membranaufhängung droht, sich übermäßig durchzubiegen. In diesem Fall legt sich der Schenkel 7 auf eine dafür vorgesehene Stützkontur 24 eines Stegs 23 auf und eine weitere Verbiegung wird vermieden.

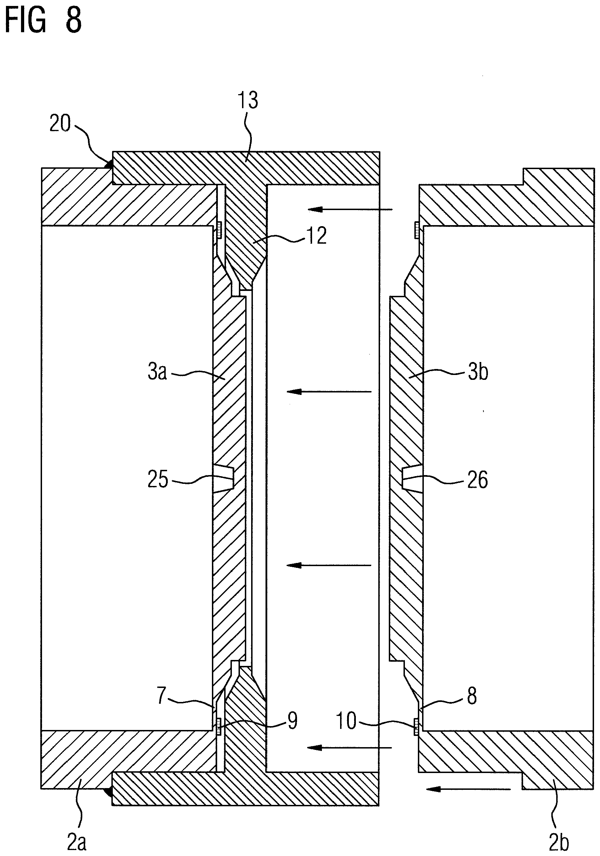

Anhand Figur 8 wird ein mögliches Verfahren zur Herstellung einer Drucksensoranordnung erläutert: Zunächst werden durch Drehen zwei rotationssymmetrische Rohrhälften 2a und 2b mit Membranhälften 3a bzw. 3b sowie der Überlastring 13 mit dem Steg 12 als jeweils einteilige Bauelemente hergestellt. Auf den Seiten der Schenkel 7 und 8, die im montierten Zustand einander zugewandt sind, werden Dehnungsaufnehmer 9 bzw. 10 appliziert. Zu dem in Figur 8 dargestellten Montagezeitpunkt ist bereits der Überlastring 13 auf die Rohrhälfte 2a aufgeschoben und dort durch eine umlaufende Schweißnaht 20, die beispielsweise mittels Laserschweißen erzeugt wurde, fixiert. Wie in Figur 8 mit Pfeilen angedeutet, wird anschließend die zweite Rohrhälfte 2b mit der Membranhälfte 3b angefügt. Daraufhin werden die beiden Membranhälften 3a und 3b durch eine Punktschweißung an Vertiefungen 25 und 26 miteinander verschweißt. Schließlich werden der Überlastring 13 und die Rohrhälfte 2b durch eine weitere umlaufende Laserschweißnaht an der von außen zugänglichen Stoßstelle miteinander verschweißt. Durch die Punktschweißung werden die beiden Membranhälften 3a und 3b zu einer Membran 3 verbunden. Da die Membran 3 steif ist, sind durch die Punktschweißung keine negativen Einflüsse auf die Messeigenschaften der Drucksensoranordnung zu erwarten, denn die Membran 3 erfährt keine Durchbiegung. Die nötige Präzision beim Zusammenbau kann durch definierte Maßtoleranzen der Drehteile erreicht werden. Durch definierte Anschläge und Verwendung einer geeigneten Schweißvorrichtung ist ein einfacher Zusammenbau bei hoher Präzision möglich.

Gemäß einem alternativen Herstellungsverfahren werden Rohr 2 und Membran 3, wie es in Figur 1 dargestellt ist, als einteiliges Drehteil und der Überlastschutz als mehrere Formteile hergestellt. In das Drehteil werden die beiden Sensoren auf den einander zugewandten Seiten der Schenkel appliziert. Anschließend werden die Formteile des Überlastschutzes, die zur Bildung eines mechanischen Anschlags im Randbereich 6 der Membran 3 wie oben beschrieben in die Nut hineinragen, eingepasst und mit dem Rohr 2 verschweißt. Die Formteile können aus zwei Halbkreishälften bestehen, die zusammengesetzt dem oben beschriebenen Überlastring 13 entsprechen, oder aus mehreren, beispielsweise drei, über den Umfangsbereich verteilten Einpassstücken mit jeweils einem in die Nut hineinragenden Zapfen zur Bildung mechanischer Anschläge.

## Patentansprüche

1. Drucksensoranordnung mit einem Rohr (2; 21), in dessen Querschnitt zwischen zwei Rohrhälften (2a, 2b) eine mit dem zu messenden Druck (14; 15) beaufschlagte Membran (3; 16) angeordnet ist,
wobei die Membran (3; 16) im mittleren Bereich eine hohe Biegesteifigkeit aufweist und im Randbereich (6) in axialer Richtung durch Aufhängung mit zwei im Wesentlichen parallel zur Ebene der Membran (3; 16) verlaufenden, bezüglich der Rohrachse rotationssymmetrischen Schenkeln (7, 8; 17, 18) in axialer Richtung federnd im Rohr (2) gelagert ist und
wobei Mittel (9, 10) zur Erfassung einer axialen, vom zu messenden Druck (14; 15) abhängigen Verschiebung der Membran (3; 16) vorhanden sind,
**dadurch gekennzeichnet,**
**dass** jede der beiden Rohrhälften (2a, 2b) über jeweils einen der beiden Schenkel (7, 8; 17, 18) einteilig mit der Membran (3) verbunden ist,
**dass** ein Überlastring (13; 19) mit den beiden Rohrhälften (2a, 2b) fest verbunden ist und zur Begrenzung einer axialen Verschiebung der Membran (3; 16) mit einem oder mehreren über den Umfangsbereich der Membran (3; 16) verteilten mechanischen Anschlägen in Form von Stegen (12; 23) oder Zapfen in eine Ausnehmung (11) zwischen den beiden Schenkeln (7, 8; 17, 18) hineinragt und
**dass** entweder das Rohr (2; 21) zusammen mit der Membran (3; 16) als ein einteiliges Drehteil und der Überlastring (13; 19) aus mindestens zwei Teilen bestehend segmentiert ausgebildet ist oder der Überlastring (13; 19) als einteiliges Bauelement und die beiden Rohrhälften (2a, 2b) zusammen mit jeweils einer Membranhälfte (3a, 3b) jeweils als einteilige Drehteile ausgebildet sind,
**dass** als Mittel (9, 10) zur Erfassung der Verschiebung der Membran (3; 16) Dehnungsaufnehmer (9, 10) auf den einander zugewandten Seiten den beiden Schenkel (7, 8; 17, 18) angeordnet sind.

2. Drucksensoranordnung nach Anspruch 1, **dadurch gekennzeichnet, dass** bei dem zusammen mit der Membran (3; 16) als ein einteiliges Drehteil ausgebildeten Rohr (2,; 21) die Stirnseite der Membran (3; 16) zur Ausbildung der beiden Schenkel (7, 8; 17, 18) mit mindestens einer in radialer Richtung in die Membran (3) hineinragenden und die Ausnehmung (11) bildenden Nut versehen ist.

3. Drucksensoranordnung nach einem der vorhergehenden Ansprüche, **dadurch gekennzeichnet, dass** der als einteiliges Bauelement ausgebildete Überlastring (13; 19) einen Steg (12) aufweist.

4. Drucksensoranordnung nach einem der vorhergehenden Ansprüche, **dadurch gekennzeichnet, dass** der Überlastring (19) mit einem Vorsprung (22) versehen ist, durch welchen die Schenkel (17, 18) gespreizt werden.

5. Messumformer zur Prozessinstrumentierung mit einer Drucksensoranordnung nach einem der vorhergehenden Ansprüche.

## Claims

1. Pressure sensor arrangement, having a tube (2; 21) in the cross section whereof between two tube halves (2a, 2b) there is arranged a membrane (3; 16) on which the pressure (14; 15) to be measured acts,
wherein the membrane (3; 16) has a high flexural rigidity in the central region and is mounted axially resiliently in the tube (2) in the edge region (6) by suspension using two limbs (7, 8; 17, 18) that run substantially parallel to the plane of the membrane (3; 16) and are rotationally symmetrical in relation to the axis of the tube, and wherein means (9, 10) are provided for detecting an axial displacement of the membrane (3; 16) that is dependent on the pressure (14; 15) to be measured,
**characterised in that**
each of the two rotor halves (2a, 2b) is connected to the membrane (3) in one piece via one of the two limbs (7, 8; 17, 18) in each case,
an overload ring (13; 19) is connected to the two tube halves (2a, 2b) in a fixed manner and, in order to limit axial displacement of the membrane (3; 16), projects into a recess (11) between the two limbs (7, 8; 17, 18) with one or more mechanical stop elements in the form of webs (12; 23) or pins that are distributed over the peripheral region of the membrane (3; 16) and
either the tube (2; 21), together with the membrane (3; 16) as a one-piece lathed part and the overload ring (13; 19), is embodied in a segmented manner, consisting of at least two parts, or the overload ring (13; 19) is embodied as a one-piece constituent element and the two tube halves (2a, 2b), together with a membrane half (3a, 3b) in each case, are each embodied as one-piece lathed parts,
expansion absorbers (9, 10) are arranged on the mutually facing sides of the two limbs (7, 8; 17, 18) as means (9, 10) for detecting the displacement of the membrane (3; 16).

2. Pressure sensor arrangement according to claim 1, **characterised in that**, in the case of the tube (2; 21) embodied as a one-piece lathed part together with the membrane (3; 16), for the purpose of forming the two limbs (7, 8; 17, 18), the end face of the membrane (3; 16) is provided with at least one groove that projects radially into the membrane (3) and forms the recess (11).

3. Pressure sensor arrangement according to one of the preceding claims, **characterised in that** the overload ring (13; 19) embodied as a one-piece constituent element has a web (12) .

4. Pressure sensor arrangement according to one of the preceding claims, **characterised in that** the overload ring (19) is provided with a projection (22), by way of which the limbs (17, 18) are spread.

5. Measuring transducer for process instrumentation, having a pressure sensor arrangement according to one of the preceding claims.

## Revendications

1. Agencement formant capteur de pression, comprenant un tube (2 ; 21), dans la section transversale duquel est monté, entre deux moitiés (2a, 2b) de tube, une membrane (3 ; 16) soumise à la pression (14 ; 15) à mesurer,
dans lequel la membrane (3 ; 16) a, dans la partie médiane, une grande résistance à la flexion et, dans la partie (6) de bord dans la direction axiale, est montée dans le tube (2) élastiquement dans la direction axiale, par suspension par deux branches (7, 8 ; 17, 18) s'étendant sensiblement parallèlement au plan de la membrane (3 ; 16) et de révolution par rapport à l'axe du tube, et dans lequel il y a des moyens (9, 10) de détection d'un déplacement axial de la membrane (3 ; 16) en fonction de la pression (14 ; 15) à mesurer,
**caractérisé**
**en ce que** chacune des deux moitiés (2a, 2b) de tube est reliée d'une seule pièce à la membrane (3) par, respectivement, l'une des deux branches (7, 8 ; 17, 18),
**en ce qu'**un anneau (13 ; 19) de surcharge est relié fixement au deux moitiés (2a, 2b) de tube et, pour limiter un déplacement axial de la membrane (3 ; 16), pénètre dans un évidement (11) entre les deux branches (7, 8 ; 17, 18) par une ou par plusieurs butées mécaniques réparties sur la partie du pourtour de la membrane (3 ; 16) sous forme de talons (12 ; 23) ou de tenons et
**en ce que**, ou bien le tube (2 ; 21), ensemble avec la membrane (3 ; 16), est constitué de manière segmentée consistant en une partie tournante d'une seule pièce et en l'anneau (13 ; 19) de surcharge en au moins deux pièces, ou bien l'anneau (13 ; 19) de surcharge est constitué sous la forme d'un élément constitutif d'une seule pièce et les deux moitiés (2a, 2b) de tube, ensemble avec, respectivement une moitié (3a, 3b) de membrane, respectivement sous la forme de parties tournantes d'une seule pièce,
**en ce qu'**il est prévu, comme moyens (9, 10) de détection du déplacement de la membrane (3 ; 16) des capteurs (9, 10) de dilatation sur les côtés tournés l'un vers l'autre des deux branches (7, 8 ; 17, 18).

2. Agencement de capteur de pression suivant la revendication 1, **caractérisé en ce que**, pour le tube (2 ; 21) constitué ensemble avec la membrane (3 ; 16) sous la forme d'une partie tournante d'une seule pièce, la face frontale de la membrane (3 ; 16) est, pour constituer les deux branches (7, 8 ; 17, 18), pourvue d'au moins une rainure pénétrant dans la direction radiale dans la membrane (3) et formant l'évidement (11).

3. Agencement de capteur de pression suivant l'une des revendications précédentes, **caractérisé en ce que** l'anneau (13 ; 16) de surcharge, constitué sous la forme d'un élément constitutif d'une seule pièce, a un talon (12).

4. Agencement de capteur de pression suivant l'une des revendications précédentes, **caractérisé en ce que** l'anneau (19) de surcharge est pourvu d'une saillie (22), par laquelle les branches (17, 18) sont écartées.

5. Transducteur de mesure pour l'instrumentation de processus, comprenant un agencement de capteur de pression suivant l'une des revendications précédentes.
